Europäisches Patentamt

European Patent Office

Office européen des brevets

(19)

(11) Publication number: **0 038 647**
**B1**

## (12) EUROPEAN PATENT SPECIFICATION

(45) Date of publication of patent specification: **08.08.84**

(51) Int. Cl.³: **B 01 J 3/06**

(21) Application number: **81301510.4**

(22) Date of filing: **07.04.81**

(54) Improved ultrahigh pressure apparatus.

(30) Priority: **18.04.80 JP 50431/80**

(43) Date of publication of application:
**28.10.81 Bulletin 81/43**

(45) Publication of the grant of the patent:
**08.08.84 Bulletin 84/32**

(84) Designated Contracting States:
**DE FR GB NL**

(56) References cited:
**US - A - 3 350 743**
**US - A - 4 097 208**

(73) Proprietor: **Ishizuka, Hiroshi**
**19-2, Ebara 6-chome Shinagawa-ku**
**Tokyo (JP)**

(72) Inventor: **Ishizuka, Hiroshi**
**19-2, Ebara 6-chome Shinagawa-ku**
**Tokyo (JP)**

(74) Representative: **Needle, Jacqueline et al,**
**PAGE, WHITE & FARRER 5 Plough Place New**
**Fetter Lane**
**London EC4A 1HY (GB)**

Courier Press, Leamington Spa, England.

# Description

The present invention relates to an improved ultra-high pressure apparatus, and particularly to such an apparatus capable of ensuring reproducible application of pressure in excess of 60 Kilobars to an increased volume of the specimen at a substantially raised load efficiency.

Techniques have been developed for subjecting a reasonable volume of a solid specimen to a pressure of tens of kilobars at an elevated temperature and have been adapted for years to industrial production of such useful super hard materials as diamond and cubic boron nitride (CBN) through a catalytic conversion from more common phases of graphite and hexagonal boron nitride, respectively. The apparatus generally used is of the so-called piston-cylinder type, and basically comprises a pair of opposed tapered punches (pistons) with an annular die (cylinder) placed between in alignment with the punches.

One typical apparatus of this category, is known from U.S. Patent No. 2,941,248 specification for example, and is often referred to as "belt" apparatus. It uses a pair of tapered punches and an annular die, each, of a unique surface formation, and a respective gasket is inserted between the opposing faces of these elements. The apparatus is designed such that when the punches move towards the die for squeezing the specimen contained therein, the die efficiently receives from each punch, by way of the gaskets, axial compressive forces to set against axial tensile stresses within the die material which results from the pressure working on the bore face of die which would eventually laterally crack the die. This enables the die to withstand pressure conditions beyond the proper strength of the die material without damage.

However, this apparatus can only accommodate a limited amount of the specimen relative to the overall volume of die, which is made of one of the most compression resistant materials industrially available, namely of cemented tungsten carbide. As the mass of the die made from this material is increased, the die tends to exhibit a decreasing strength towards the core. Such irregularities in strength have been the main reason making the manufacture of die elements of increased dimensions technically impossible. No other materials are available for the die because they do not have the strength to resist forces conducted substantially unbuffed onto the bore face from the core of the bore where the pressure generated reaches of the order of 50 kilobars or more.

Thus apparatus of this piston-cylinder type only achieves a poor load efficiency relative to the pressure attainable and the specimen volume to be treated. This is especially remarkable when the apparatus is designed for pressures in excess of 60 kilobars, which is possible only at a considerable expense in specimen accommodation.

A substantially improved efficiency of specimen accommodation has been attainable with an apparatus of another piston-cylinder type, which uses a rigid hollow cylinder of hard sintered alumina placed on a straight-cylindrical bore face of the die which is made of steel, as known from U.S. Patent No. 3,350,743. As the die is subjected to a reduced force by the intervening alumina cylinder even when a pressure of the order of 50 kilobars is reached inside the bore, the die can be made of some kinds of hardened steels. Such hardened steels mechanically less strong but are preferred because they have better strength regularity, machinability and economy. With such material available, a die of this type of apparatus can be made to an increased volume for accommodation of a substantially increased amount of specimen to be treated.

It is essential for such apparatus which uses an alumina cylinder to prevent deformation of the latter during compressive work so as to ensure its function as a pressure buffer for the die. In the arrangement shown in U.S. Patent No. 3,350,743 the alumina cylinder tends to axially extend and crack, and thus the apparatus tends to be ineffective as the cylinder increases in length if used for a pressure production of the order of 60 kilobars or more. Thus, for pressure of this order only a shortened cylinder is applicable, and, in the end, a die having a rather short bore alone is effectively used for a catalytic conversion to diamond or CBN.

U.S. Patent No. 4,097,208 describes an arrangement of the piston-cylinder type which enables the use of an alumina cylinder having similar properties to the above but having an increased axial length. In this U.S. Patent the alumina cylinder has a trapezoidal cross section, rather than the conventional rectangular cross section, with a conical face which is formed to extend inwardly from each orifice and to extend substantially parallel to the conical face of neighboring punches. When compressed by the punches by way of inserted gasket, the alumina cylinder is subjected to a stress condition which is better balanced than the conventional condition such that deformation of the axially elongated alumina cylinder is effectively suppressed. This ensures that the alumina cylinder functions to decrease the force to be conducted to the die.

In this arrangement, however, stress conditions within the alumina material cylinder become unbalanced at the borders between the conical and straight-cylindrical portions thereof as the pressure generated within the bore is increased over 60 kilobars, and lateral cracking at the borders results. Such failure causes an insufficient provision of compressive force to the inner straight-cylindrical portion for suppressing the axial deformation, and thus results in cracks and the cylinder becomes ineffective as a pressure buffer for the die.

The low pressure resistance of the alumina cylinder makes the apparatus of U.S. Patent No. 4,097,208 unsuitable for pressures in excess of 60 kilobars.

Theoretically, it may be possible to adapt either type of piston-cylinder apparatus for successful use at a pressure above 60 kilobars, but only at a considerable expense of volume of specimen accommodation as well as load efficiency.

European Patent application EP—A—37714, which prior art falls within the terms of Art. 54(3)EPC describes another approach to the generation of such high pressures. The apparatus illustrated therein comprise a die member which consists, entirely or partly inwardly, of wear resistant material such as diamond or CBN (cubic boron nitride) compact. While higher compressive stresses may be allowed to the bore, the die member has the disadvantage compared to conventional apparatus that, in addition to increased manufacturing costs, room for specimen accommodation is considerably limited as the die member requires for its manufacture treatment under combined pressure-temperature conditions such that diamond or CBN is the crystallographically favored polymorphism of the respective substances. Such treatment can only be practically done in a reaction chamber of another high temperature-high pressure apparatus.

No apparatus has yet been published which would permit a reasonable amount of specimen to be treated under a pressure of the order of 60 kilobars or more at an elevated temperature.

It is the object of the present invention to provide an apparatus which can subject an increased volume of specimen to an ultrahigh pressure in excess of 60 kilobars and simultaneously to an elevated temperature at a substantially improved load efficiency. The apparatus is based on the arrangement which essentially uses an alumina cylinder as a pressure buffer for the die, and seeks to improve the pressure buffer function over an extended pressure range.

According to the present invention there is provided an ultrahigh pressure apparatus, comprising a pair of opposed frustoconical punches, an annular die having a central bore extending therethrough which is straight-cylindrical at least partially at an inner portion and which is placed between and in alignment with said punches, a rigid hollow cylinder of hard sintered alumina placed in circumferential contact with the straight cylindrical bore face of the die, and a pair of gaskets of a readily deformable material which are each placed around a conical face of a respective punch adjacent to a bore face portion of the die outside the rigid cylinder and to an orifice of said cylinder, characterized in that said rigid hollow cylinder has a bore face formed substantially quarter-circular or quarter-elliptical, in a radial section taken along an axis thereof, starting at either axial end and ending at a central portion thereof.

The alumina cylinder of the apparatus of the invention is provided with a curved bore face, that is, is formed substantially quarter-circular or quarter-elliptical, as viewed in a radial cross section taken along the axis, over a portion from each orifice to a central portion, whereby compressive forces, occurring on the bore face of the cylinder as the punches move closer, yield axial compressive stresses within the cylinder material at a substantially improved efficiency, so that the cylinder has an increased resistance against fracture and deformation and, as a result, an improved load efficiency is achieved.

An optimal pressure resistance of the alumina cylinder is obtainable with a bore face formation of a half-circle, in cross section, whose diameter is substantially equal to the cylinder's axial length. Such a half-circle could be replaced by a half-ellipsis whose major axis corresponds to the cylinder's axial length, depending on the geometry of the tungsten carbide punches and of the steel die to be used together as well as the volume of specimen accommodation and the maximum pressure to be attained. In the latter case the ratio of major/minor axis should preferably be smaller than or equal to 2, in view of the stress buffering effect of the cylinder and the load efficiency of the apparatus.

For ease of manufacture, the cylinder may be provided with a circular flat face adjacent to the outer cylindrical face, the width of the circular face not exceeding 20% of the outer diameter of the cylinder. Additionally or alternatively the cylinder may have a straight-cylindrical face in the vicinity of the axial centre of the bore, which does not exceed 20% of the overall length of the cylinder.

The bore faces so formed are not necessarily machine finished after the sintering process. A gasket of a readily deformable material is placed adjacent to each orifice of the alumina cylinder. Each gasket has a face in contact with the cylinder, the face preferably being formed to be complementary to the cylinder for a higher load efficiency and better prevention of unexpected deformations of the specimen. The bordering face of the gasket may be formed to comprise a conical portion substantially parallel to the flank of punch which allows a substantially identical pressure eventually to be attained.

The die does not necessarily have a bore face which is straight cylindrical over the entire axial length of the bore as has been conventionally required. Instead, although the inner portion of the bore which is adjacent to the alumina cylinder is straight-cylindrical, the die may have a rounded bore face portion, which is circular or elliptical in section as on the alumina cylinder, or a conical face extending substantially parallel to the flank of the punches, inwardly from each orifice of the die bore and adjacent to the inner straight-cylindrical portion. This allows compressive force to be applied to the die by way of said curved or conical portion. As radial deformation of the bore face by means of such compressive force is efficiently eliminated, the die of this configuration provides improved circumferential support for the cylinder against radial deformation thereon. Thus even higher pressures can be attained by providing the die with a partially curved or conical bore face and the alumina cylinder with the circularly or elliptically curved bore face.

Embodiments of the invention will hereinafter be described, by way of example, with reference to the accompanying drawings, in which:

Figures 1 and 2 show vertical sections of the main part of two conventionally designed ultra-high pressure apparatus utilizing an alumina cylinder;

Figures 3 and 4 illustrate similar vertical sections of first and second arrangements of the invention, in which a novel designed alumina cylinder is employed; and

Figures 5 and 6 show similar vertical sections of third and fourth embodiments of apparatus of the invention, in which the novel alumina cylinder is used together with a die member which has a partially curved bore face.

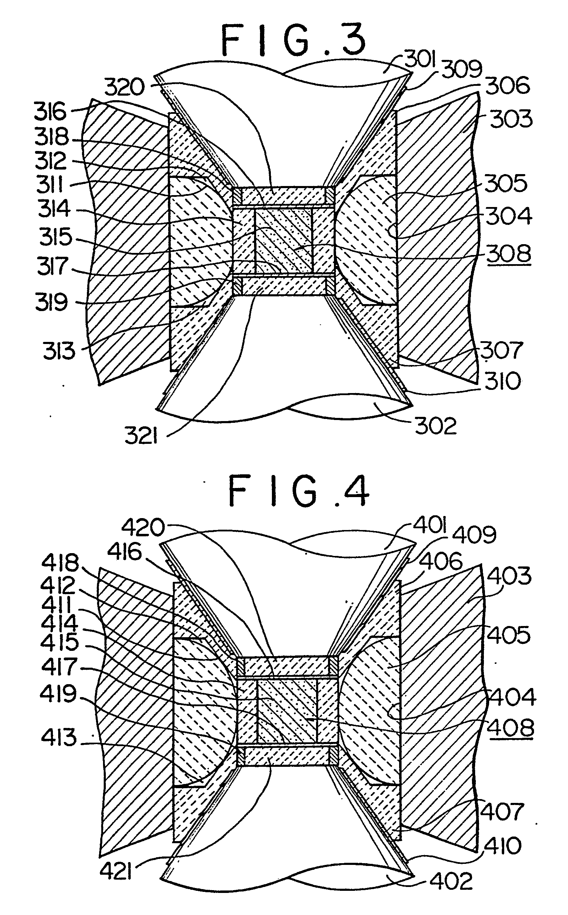

Figures 3 to 6 each show schematically an example of a charge assembly inside the alumina cylinder for the synthesis of the diamond from graphite.

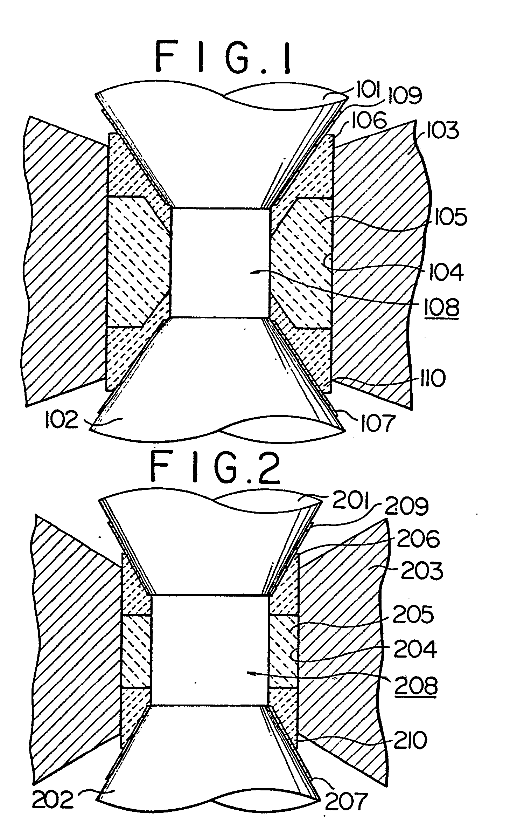

The apparatus illustrated in Figures 1 to 6 commonly comprise a pair of frustoconical punches 101, 102 201, 202...601, 602, respectively, made of a compression resistant material such as cemented tungsten carbide (WC-Co alloy) and placed in opposed disposition and in alignment with an annular die 103, 203...603. The die is made of a hardened steel such as die steel or high speed steel and is placed between the punches and has a central bore 104, 204...604. At least an inner portion of the bore is substantially straight-cylindrical, the inner portion extending over an axial length greater than or equal to that of an alumina cylinder to be received therein. The rigid hollow cylinder 105, 205...605 is of alumina material sintered to be substantially free of pores and is placed adjacent to the bore face of the die within the straight cylindrical portion. Gaskets 106, 107, 206, 207...606, 607 are placed around conical flanks of the punches adjacent to the bore face outwardly of the alumina cylinder and adjacent to the respective orifice of the cylinder. A cavity 108, 208...608 within the bore of the alumina cylinder accommodates the reaction charge assembly.

In the apparatus shown in Figure 1, the die 103 has a bore face which is substantially straight-cylindrical over the entire axial length of the bore. The alumina cylinder 105 contacts a middle portion of the bore face and has a trapezoidal cross section defined by an inner straight cylindrical portion and an adjacent conical face on either side of said portion. A respective protective cover 109, 110 of thin mild-steel plate is provided on each punch 101, 102.

The apparatus shown in Figure 2 is a smaller size arrangement than that of Figure 1, and the ratio of the diameter of the smaller end of the punches 201, 202 to the cylindrical bore 204 of the die is considerably increased as compared to the apparatus of Figure 1. In addition, in Figure 2 an alumina cylinder 205 of rectangular cross section is received within the bore 204. Each punch 201, 202 is provided with a respective protective cover 209, 210 of a similar material to that of the covers in Figure 1.

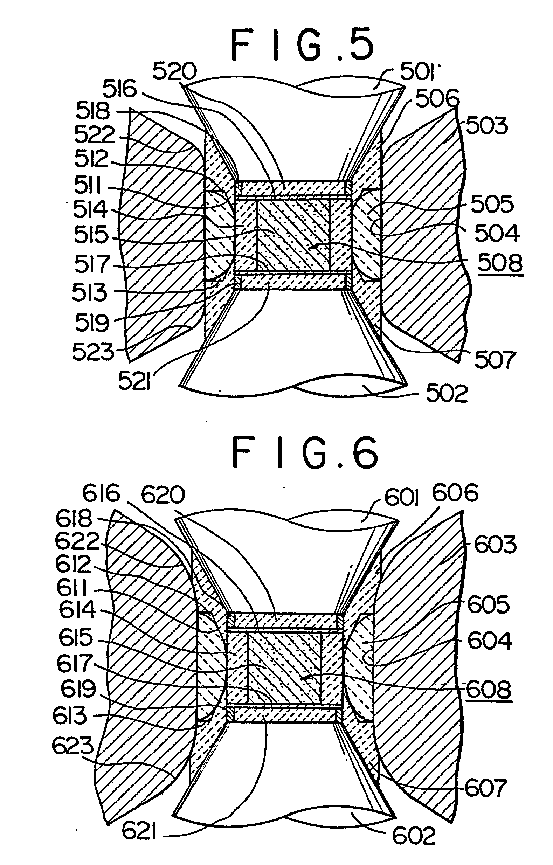

The apparatus shown in Figures 3 and 4 is similar to that described above in that an annular die 303, 403 has a central bore 304, 404 which is straight-cylindrical over its entire axial length. In this apparatus, a rigid hollow cylinder 305, 405 of alumina, placed on the bore face of die has a curved bore formation. In Figure 3, the cylinder, as viewed in a radial cross section, exhibits a quarter-circular curvature on the bore face 311 at a portion between a short inner straight-cylindrical face and a flat face around each orifice of the cylinder 305. In the apparatus shown in Figure 4, the cylinder 405 has a bore face 411 which is generally half-elliptical in radial cross section. In both of Figures 3 and 4, a respective gasket 306, 307, 406, 407 is provided around each punch 301, 302, 401, 402 over the flank thereof. The gaskets have a circumferential face which is substantially straight-cylindrical to fit the bore of the die 303, 403, and are placed adjacent to each orifice of the cylinder 305, 405. Small gaps 312, 313, 412, 413 are defined between the contacting faces of the gaskets and the cylinder. Each gasket and the cylinder each have a minimum opening which is substantially equal to the diameter of the smaller end of the punches such that a cavity 308, 408, for the accommodation of a generally cylindrical charge assembly is defined. The charge assembly can be of a conventional design which consists of a fired agalmatolite tube 314, 414 to serve as a container for mixed powders 315, 415 of, for example, carbon and a flux metal such as nickel or cobalt, and sealed with a thin disk 316, 317, 416, 417 of molybdenum at either end of the tube. Such disks 316, 317, 416, 417 are arranged adjacent to rings 318, 319, 418, 419, which in turn are adjacent to the punches 301, 302, 401, 402, thus providing an electrical path from the punches through the specimen 315, 415 for heating the latter. Each ring is stuffed with a molded refractory 320, 321, 420, 421 in order to reduce thermal and electrical transmission to the punches from the specimen 315, 415 during heating.

The apparatus illustrated in Figures 5 and 6, is modified and comprises an annular die 503, 603 which has a central bore 504, 604 having a substantially straight-cylindrical inner portion on either side of which an adjacent curved face is arranged. Each curved face is connected tangentially to upper and lower conical faces of the die 503, 603. The curved faces may be part-circular in cross section. A rigid hollow cylinder 505, 605 of alumina is placed in circumferential contact with the inner portion of the bore of the die 503, 603. In Figure 5, the alumina cylinder has a short straight-cylindrical bore face at a middle portion thereof which extends between two sectionally quarter-circular curved faces which are each substantially tangentially connected to said middle portion. Such a bore face formation can be replaced, as shown in Figure 6, by a generally half-elliptical face having a major axis equal to the cylinder's overall axial length. Respective annular gaskets 506, 507, 606, 607 of a fired alumina silicate material surround each punch 501, 502, 601, 602 on the flank thereof. In the apparatus of Figure 5, the die has a straight cylindrical bore face on either side of the alumina cylindrical 505, and the gaskets 506, 507 have a circumferential face which is substantially straight-cylindrical to match the bore of the die 503. Outwardly of this cylindrical portion, each gasket need not have an outer face which corresponds in shape to that of the die bore, an approximate match being sufficient. In Figure 6, the die 603 has a curved face beginning at each orifice of the alumina cylinder 605, and the circumferential face of each gasket 606, 607 within the die bore is for the most part shaped to closely conform to the shape of the bore.

In both of Figures 5 and 6, as in Figures 3 or 4, a respective gasket is placed adjacent to each orifice of the alumina cylinder and to the conical face of the respective punch. Small gaps 512, 513, 612, 613 remain, but these do not have an adverse affect. The gaskets 506, 507, 606, 607 and the alumina cylinder 505, 605, each have a minimum opening with a diameter substantially equal to that of the smaller end of the punches so that a cavity 508, 608 for the reaction charge assembly is provided. As in Figures 3 and 4, the charge assembly in Figures 5 and 6 substantially consists of an agalmatolite tube 514, 614 for containing the specimen 515, 615, and sealed at each end with a molybdenum disk 516, 517, 616, 617 which is adjacent to a ring 518, 519, 618, 619 of mild steel stuffed with a molded refractory 520, 521, 620, 621. In turn, each ring is in contact with the respective punch 501, 502, 601, 602, such that an electrical path from the punches through the specimen for heating is provided, whilst the punches are protected against the heat produced electrically within the specimen during heating.

In the following, the results of comparative tests are described giving the press loads required for producing given pressures within the apparatus shown in Figures 1 to 6, as well as the durability for repeated use. The pressures were detected by means of discontinuity points in the electrical resistance of bismuth and barium metals which have been observed to occur under specific pressures accompanied by phase transitions. The test mode was adapted from the one described in "The Review of Scientific Instruments" Vol. 34, No. 2 (1969), pages 125—131.

Each apparatus was operated on a hydraulic press of the type shown in British Patent No. 1,213,714.

Example 1

The apparatus used in this run was the type illustrated in Figure 3, and comprised a pair of tungsten carbide punches each tapering at 33° to the axis thereof and having a flat circular smaller end face having a diameter of 75 mm. An annular die of steel had a straight cylindrical central bore having a 170 mm diameter and a 170 mm axial length. A rigid hollow cylinder on the bore face was made of alumina sintered to be substantially pore free. The overall axial length of the cylinder was 95 mm and the axial length of the central straight-cylindrical portion was 15 mm. The minimum opening diameter of the cylinder (at the straight-cylindrical portion) was 75 mm and the circular flat face around each orifice of the cylinder had an 8 mm width. The radius of the sectionally circular curved face of the cylinder adjacent to the flat face and at the orifice was 40 mm and extended inwardly. The tube to be placed inside the alumina cylinder was made of a fired agalmatolite of 40 mm in I.D. and 50 mm in axial length. A respective gasket of fired agalmatolite was placed to fill the space within the bore of the die outwardly of the alumina cylinder, between each punch and the alumina cylinder around the opening of the cylinder, and load was applied by the punches through the gaskets.

Example 2

In this run a rigid hollow cylinder of alumina as illustrated in Figure 4 was used, which had an overall axial length of 110 mm and comprised a straight-cylindrical bore face having an axial length of 5 mm, a circular flat face having a 5 mm width and a curved face of a quarter-elliptical section on each side of and adjacent to the straight-cylindrical bore face. The quarter-elliptical section had a major axis 105 mm long and a minor axis 85 mm long. Punches, die and agalmatolite tube were substantially identical to each of corresponding elements used in Example 1.

Reference Test 1

Load was applied for comparative purpose with an arrangement as shown in Figure 1, in which an alumina cylinder was used which was similarly made of a pore-free alumina but of conventional bore formation.

Example 3

Here an apparatus was used as illustrated in Figure 5, which comprised a pair of frustoconical punches of cemented tungsten carbide each tapering at 30° to the axis thereof and having a flat circular face 20 mm across. An annular die of hardened steel had a central bore which was 30 mm in diameter at the straight-cylindrical portion. The straight-cylindrical inner portion of the bore face of the die had a 22 mm length, with an adjacent curved face, circular in section with a 5 mm radius, on either side. A rigid hollow cylinder of a sintered alumina on the bore face of the die was 15 mm in overall axial length, 20 mm in minimum I.D. and has a straight-cylindrical face at an inner portion of the bore, and a curved face, sectionally quarter-circular of 5 mm radius, on each side in a substantially tangential connection therewith. An agalmatolite tube was 12 mm in axial length and 12 mm in I.D.

Example 4

An arrangement as shown in Figure 6 was used. A die had a central bore face which consisted of a straight-cylindrical inner portion having a 30 mm diameter and an axial length of 18 mm. An outer portion on each side of said inner portion, was circular in cross section, having a radius of 15 mm, and tangentially connected to the inner portion. An alumina cylinder had a substantially half-elliptical bore face whose major axis was 18 mm (identical to the overall axial length of the cylinder) and whose minor axis was 5 mm (identical to the maximum thickness). Punches and an agalmatolite tube were substantially the same as those used in Example 3.

Reference Test 2

For a comparative purpose with the arrangements in Examples 3 and 4, an apparatus was used as illustrated in Figure 2 which comprised an annular die and an alumina cylinder, both, of a conventional design, and pressure calibration tests were conducted for punch load requirements. The die had a straight-cylindrical central bore having a diameter of 30 mm and an axial length of 36 mm. Starting at each orifice the bore had a conical face tapering inwardly at an angle of 60° to the axis thereof. Punches and a charge assembly were substantially the same as those in Examples 3 and 4.

Load readings of the hydraulic press on which each apparatus was mounted are given in the table below for Examples 1 to 4 and for Reference Tests 1 and 2.

| Run | 25.4 Kbar | 55 Kbar | 77 Kbar | Durability (at 55 Kbar) |
|---|---|---|---|---|
| Example 1 | 2800 tons | 6500 tons | 10000 tons | >700 runs |
| Example 2 | 3000 | 7000 | 11000 | >700 |
| Ref. Test 1 | 3000 (approx.) | 7600 | unattainable | 400 |
| Example 3 | 140 | 300 | 420 | 1500 (approx.) |
| Example 4 | 150 | 330 | 460 | 2000 (approx.) |
| Ref. Test 2 | 120 | 250 | >400 (unattainable) | 600 (approx.) |

As is clear from the above description, apparatus according to the invention uses a rigid hollow cylinder of a novel design in which the bore face comprises a curved portion, either quarter-circular or quarter-elliptical in cross section, starting at each orifice with or without a circular flat face around. The ratio of major/minor axis in the case of an elliptical formation preferably does not exceed 2.

Apparatus of the invention has many advantages, such as:

1. An ultrahigh pressure, particularly in excess of 70 kilobars, is readily attainable;
2. An improved pressure reproduction is secured because instability of press load efficiency, which can be caused by the irregular quality of the alumina material used to form the rigid hollow cylinder, is eliminated;
3. The die member has a substantially improved durability and can thus be effective for an increased number of repeated runs; and
4. The combination of the rigid hollow cylinder of the invention with a die of curved bore formation as described herein further improves the durability of the die member.

It should be noted that the term "section(ally)" used (in the specification) to refer to the formation of elements should be understood, even without a definite reference, to refer to a radial section taken along the axis.

**Claims**

1. An ultrahigh pressure apparatus, comprising a pair of opposed frustoconical punches, an annular die having a central bore extending therethrough which is straight-cylindrical at least partially at an inner portion and which is placed between and in alignment with said punches, a rigid hollow cylinder of hard sintered alumina placed in circumferential contact with the straight cylindrical bore face of the die, and a pair of gaskets of a readily deformable material which are each placed around a conical face of a respective punch adjacent to a bore face portion of the die outside the rigid cylinder and to an orifice of said cylinder, characterised in that said rigid hollow cylinder has a bore face formed substantially quarter-circular or quarter-elliptical, in a radial section taken along an axis thereof, starting at either axial end and ending at a central portion thereof.

2. An ultrahigh pressure apparatus according to Claim 1, in which a diameter of said circular formation of the rigid hollow cylinder is substantially equal to an overall axial length thereof.

3. An ultrahigh pressure apparatus according to Claim 1, in which a major axis of said elliptical formation of the rigid hollow cylinder is substantially equal to an overall axial length thereof.

4. An ultrahigh pressure apparatus according to Claim 1, in which the ratio of major/minor axis of said elliptical formation of the rigid hollow cylinder is not in excess of two.

5. An ultrahigh pressure apparatus according to Claim 1, in which said rigid hollow cylinder is made of an alumina material sintered to be substantially free of pores.

6. An ultrahigh pressure apparatus according to Claim 1, in which said die is made of such hardened steel as die steel or high speed steel.

## Patentansprüche

1. Ultrahochdruckvorrichtung mit zwei einander gegenüberliegenden kegelstumpfförmigen Stempeln, einer Ringform mit einer dieselbe durchsetzenden Mittelbohrung, die wenigstens teilweise in einem mittleren Abschnitt geradzylindrisch und zwischen den beiden Stempeln auf diese ausgerichtet ist, einem starren Hohlzylinder aus hartem gesintertem Aluminiumoxyd, der in Umfangsberührung mit der geradzylindrischen Bohrungsfläche der Form steht und mit zwei Dichtungsringen aus leicht verformbarem Material, die jeweils um eine konische Fläche des jeweiligen Stempels nahe einem Bohrungsflächenabschnitt der Form außerhalb des starren Zylinders an einer Mündung des Zylinders angeordnet sind, dadurch gekennzeichnet, daß der starre Hohlzylinder in einem Radialschnitt längs einer Achse desselben, beginnend an einem der axialen Enden und endend an einem Mittelabschnitt desselben, eine im wesentlichen viertelkreisförmig oder viertelelliptisch ausgebildete Bohrungsfläche aufweist.

2. Ultrahochdruckvorrichtung nach Anspruch 1, worin ein Durchmesser der kreisförmigen Ausbildung des starren Hohlzylinders im wesentlichen gleich einer axialen Gesamtlänge desselben ist.

3. Ultrahochdruckvorrichtung nach Anspruch 1, worin eine größere Achse der elliptischen Ausbildung des starren Hohlzylinders im wesentlichen gleich einer axialen Gesamtlänge desselben ist.

4. Ultrahochdruckvorrichtung nach Anspruch 1, worin das Verhältnis von größerer/kleinerer Achse der elliptischen Ausbildung des starren Hohlzylinders nicht größer als zwei ist.

5. Ultrahochdruckvorrichtung nach Anspruch 1, worin der starre Hohlzylinder aus im wesentlichen porenfrei gesintertem Aluminiumoxydmaterial besteht.

6. Ultrahochdruckvorrichtung nach Anspruch 1, worin die Form aus gehärtetem Stahl, wie Gesenkstahl oder Schnellstahl, besteht.

## Revendications

1. Appareil à ultra-haute pression, comprenant deux poinçons tronconiques opposés, une matrice annulaire traversée par une alésage central qui présente la forme d'un cylindre droit au moins partiellement, en une portion intérieure, et qui est placé en alignement entre lesdits poinçons, un cylindre creux rigide en alumine frittée dure placé en contact circonférentiel avec la face de l'alésage cylindrique droit de la matrice, et deux garnitures en matière aisément déformable qui sont placées chacune autour d'une face conique d'un poinçon respectif, à proximité immédiate d'une partie de la face de l'alésage de la matrice, à l'extérieur du cylindre rigide, et d'un orifice dudit cylindre, caractérisé en ce que ledit cylindre creux rigide présente une face d'alésage formée sensiblement en quart de cercle ou en quart d'ellipse, en section radiale passant par un axe de cette face, partant de l'une ou l'autre des extrémités axiales et aboutissant à une partie centrale du cylindre.

2. Appareil à ultra-haute pression selon la revendication 1, dans lequel un diamètre de ladite formation circulaire du cylindre creux rigide est sensiblement égal à une longueur axiale globale du cylindre.

3. Appareil à ultra-haute pression selon la revendication 1, dans lequel un grand axe de ladite formation en ellipse du cylindre creux rigide est sensiblement égal à une longueur axiale globale du cylindre.

4. Appareil à ultra-haute pression selon la revendication 1, dans lequel le rapport grand axe/petit axe de ladite formation en ellipse du cylindre creux rigide n'est pas supérieur à 2.

5. Appareil à ultra-haute pression selon la revendication 1, dans lequel ledit cylindre creux rigide est réalisé en une matière à base d'alumine frittée de façon à être sensiblement exempte de pores.

6. Appareil à ultra-haute pression selon la revendication 1, dans lequel ladite matrice est réalisée en un acier durci tel que de l'acier pour matrice ou de l'acier très rapide.

# F I G . I

# F I G . 2

# F I G . 3

# F I G . 4

# F I G .5

# F I G .6